# FASCICULE DE BREVET EUROPEEN

(11) **EP 1 833 171 B1**
(45) Date de publication et mention de la délivrance du brevet: **09.06.2010**
(21) Numéro de dépôt: 06110899.9
(22) Date de dépôt: 09.03.2006
(51) Int. Cl.: H04B 1/28

(54) **Dispositif de réception et/ou d'émission de signaux radiofréquences à réduction du bruit**
Vorrichtung mit Rauschunterdrückung zum Empfangen und/oder Senden von Funksignalen
Apparatus with noise reduction for receiving and/or sending radiofrequency signals

(43) Date de publication de la demande: 12.09.2007
(73) Titulaire: The Swatch Group Research and Development Ltd., 2074 Marin (CH)
(72) Inventeur: Zellweger, Emil, 4514, Lommiswil (CH); Casagrande, Arnaud, 2523, Lignières (CH)
(74) Mandataire: Vigand, Philippe

(56) Documents cités:
- US-A1- 2005 017 887
- US-B1- 6 421 530
- PATENT ABSTRACTS OF JAPAN vol. 017, no. 706 (E-1483), 22 décembre 1993 (1993-12-22) & JP 05 244032 A (SANYO ELECTRIC CO LTD), 21 septembre 1993 (1993-09-21)

## Description

L'invention concerne un dispositif de réception et/ou d'émission de signaux radiofréquences basse puissance à réduction du bruit. Une double conversion de fréquence est opérée dans le dispositif de manière à abaisser la fréquence des signaux radiofréquences reçus ou à augmenter la fréquence des signaux en bande de base à transmettre. Pour ce faire, le dispositif comprend un filtre passe-bande lié à une antenne de réception ou d'émission de signaux radiofréquences, au moins un amplificateur à faible bruit pour amplifier les signaux reçus ou transmis, et un premier et second blocs mélangeurs pour opérer une double conversion de fréquence à l'aide de signaux haute fréquence générés par un étage oscillateur et un élément diviseur.

Une double conversion de fréquence pour abaisser la fréquence des signaux radiofréquences reçus en une fréquence en bande de base est généralement nécessaire. Cela permet d'éviter certains problèmes parasites dans le cas d'une unique conversion de fréquence lors de la réception ou de l'émission des signaux radiofréquences.

Dans le document US 2005/0017887. il est justement décrit un dispositif de réception et d'émission de signaux radiofréquences susceptible d'opérer une double conversion de fréquence pour abaisser la fréquence des signaux radiofréquences reçus à une seule antenne en une fréquence en bande de base. Une double conversion de fréquence est également opérée pour générer des signaux radiofréquences à transmettre par la même antenne sur la base de signaux en bande de base.

Avec une unique conversion de fréquence, les signaux haute fréquence générés par l'étage oscillateur et fournis au bloc mélangeur doivent être de fréquence sensiblement égale à la fréquence des signaux radiofréquences. Des signaux parasites à fréquences harmoniques de la fréquence des signaux radiofréquences peuvent être produits. Comme le mélangeur possède une isolation limitée, il peut survenir également un rayonnement parasite inverse des signaux haute fréquence en direction de l'antenne dans le mode de réception des signaux radiofréquences. Ce rayonnement inverse de fréquence équivalente à la fréquence des signaux radiofréquences n'est ainsi pas filtré par le filtre passe-bande d'entrée. De plus dans le mode d'émission, les signaux radiofréquences produits de fréquence équivalente à la fréquence des signaux haute fréquence de l'étage oscillateur, peuvent influer sur l'étage oscillateur. De par le rayonnement des signaux radiofréquences transmis, un oscillateur commandé en tension d'un étage oscillateur est susceptible de générer des signaux haute fréquence de fréquence plus grande que la valeur souhaitée.

Lors de la conversion de fréquence dans un dispositif de réception/émission de signaux radiofréquences, il est constaté un problème de bruit qui est lié d'une part à l'amplificateur et au bloc mélangeur, et d'autre part à la fréquence image lors de la conversion de fréquence. Cette fréquence image est susceptible de perturber les signaux utiles de données à retirer des signaux radiofréquences captés notamment lors de la conversion d'une haute fréquence en une basse fréquence. Le gain des signaux à fréquence image en sortie du bloc mélangeur est en général plus important que le gain des signaux utiles de données, ce qui peut compliquer les opérations de traitement de l'information contenue dans les signaux radiofréquences captés.

Plusieurs réalisations de dispositifs de réception et/ou d'émission de signaux radiofréquences ont déjà été proposées par le passé pour réduire une partie du bruit, en particulier lors des opérations de conversion de fréquence des signaux radiofréquences captés. On peut citer à ce titre le document WO 03/009483, qui décrit un tel dispositif de réception et d'émission de signaux radiofréquences dont la fréquence peut être égale à 2 GHz et 5 GHz à l'aide de deux antennes filtres. Lors des opérations de double conversion de fréquence, une architecture spécifique de l'un des blocs mélangeurs est réalisée de manière à retirer la fréquence image des signaux convertis. Un oscillateur commandé en tension est agencé pour générer des premiers signaux haute fréquence dont la fréquence se situe entre 2 et 5 GHz de manière qu'après la première conversion de fréquence, la fréquence des signaux intermédiaires se situe proche de 1.5 GHz.

Une telle solution proposée dans le document WO 03/009483 complique considérablement la structure d'un tel dispositif de réception et/ou d'émission de signaux radiofréquences pour pouvoir retirer ou atténuer les signaux parasites à fréquence image. La fréquence des premiers signaux haute fréquence n'est déterminée que pour se trouver entre les deux fréquences de signaux radiofréquences à capter ou transmettre. Un tel dispositif de réception et d'émission de signaux radiofréquences est fort consommateur en énergie électrique. De ce fait, il ne peut équiper un instrument portable de petite taille alimenté par une batterie ou un accumulateur d'énergie électrique.

Au même titre que le précédent document, le document JP 05-244032 décrit un dispositif de communication de signaux radiofréquences à double bande de fréquences. Pour la réception des signaux radiofréquences, le dispositif comprend un premier filtre passe-bande (810 à 826 MHz) et un second filtre passe-bande (1501 à 1513 MHz), qui sont reliés à une même antenne de réception afin de filtrer des signaux radiofréquences dont la fréquence est située dans la bande de fréquences du premier filtre ou dans la bande de fréquences du second filtre. Une première conversion de fréquence des signaux radiofréquences reçus et filtrés est effectuée par un premier bloc mélangeur à l'aide de premiers signaux haute fréquence dont la fréquence se situe proche d'une valeur moyenne entre les fréquences des signaux filtrés par les premier ou second filtres passe-bande. De cette manière, la fréquence des signaux intermédiaires se situe à une valeur voisine de 344 MHz.

L'invention a donc pour but principal de fournir un dispositif de réception et/ou d'émission de signaux radiofréquences basse puissance de conception simple pour réduire facilement le bruit principalement lié à la fréquence image des signaux convertis afin de pallier les inconvénients de l'art antérieur cité ci-dessus. De plus, le maximum d'éléments du dispositif de structure simple doit pouvoir être intégré dans un unique circuit intégré par économie de place.

A cet effet, l'invention concerne un dispositif de réception et/ou d'émission de signaux radiofréquences basse puissance cité ci-devant qui se **caractérise en ce que** l'étage oscillateur est configuré pour générer des premiers signaux haute fréquence, dont la fréquence est en dehors de la bande de fréquence du filtre passe-bande et plus grande d'un facteur M/N compris entre 1 et 2 que la fréquence des signaux radiofréquences reçus, où N et M sont des nombres entiers plus grands que 1 avec M plus grand que N mais inférieur à 2-N. L'invention est défini par les revendications.

Un avantage du dispositif de réception et/ou d'émission selon l'invention réside dans le fait qu'en générant des premiers signaux haute fréquence, dont la fréquence est plus grande d'un facteur déterminé que la fréquence des signaux radiofréquences reçus, une forte réduction du bruit généré par une fréquence image en entrée du premier bloc mélangeur est obtenue. De cette manière, les signaux utiles sont moins perturbés afin de faciliter les opérations de démodulations subséquentes.

De préférence, la fréquence des premiers signaux haute fréquence est plus grande d'un facteur 4/3 de la fréquence des signaux radiofréquences captés. Après la première conversion de fréquence, les signaux intermédiaires obtenus ont donc une fréquence valant 1/3 de la fréquence des signaux radiofréquences. Ceci permet d'effectuer facilement une seconde conversion de fréquence à l'aide de seconds signaux haute fréquence de fréquence divisée par 4 par rapport à la fréquence des premiers signaux. Des signaux en bande de base, c'est-à-dire à fréquence porteuse voisine de 0, sont ainsi obtenus après deux opérations de conversion de fréquence à l'aide d'une structure simple et en réduisant fortement le bruit lié à la fréquence image.

Avantageusement, la structure du dispositif de réception et/ou d'émission est réalisée avec un nombre réduit de composants sans blindage particulier. La majeure partie du dispositif basse puissance peut être facilement intégrée dans un unique circuit intégré, par exemple réalisé dans une technologie CMOS à 0,25 µm. De ce fait à l'exception du filtre passe-bande et d'un cristal de quartz pour l'étage oscillateur, tous les autres éléments sont intégrés dans le circuit intégré. Toutefois comme l'amplificateur à faible bruit intégré précédant le premier bloc mélangeur est une des causes des signaux à fréquence image, il est donc avantageux que l'étage oscillateur génère de tels signaux haute fréquence à fréquence plus grande que la fréquence des signaux radiofréquences.

Les buts, avantages et caractéristiques du dispositif de réception et/ou d'émission de signaux radiofréquences basse puissance apparaîtront mieux dans la description suivante de formes d'exécution illustrées par les dessins sur lesquels :
- la figure 1 représente une première forme d'exécution d'un dispositif de réception et/ou d'émission de signaux radiofréquences selon l'invention,
- la figure 2 représente deux graphiques du gain et du bruit des signaux amplifiés et convertis à la sortie du premier bloc mélangeur montrant le niveau des signaux parasites à fréquence image en fonction de la fréquence des premiers signaux haute fréquence générés par l'étage oscillateur,
- la figure 3 représente une seconde forme d'exécution d'une partie du dispositif pour l'émission de signaux radiofréquences selon l'invention, et
- la figure 4 représente une troisième forme d'exécution d'une partie du dispositif pour l'émission de signaux radiofréquences selon l'invention.

Dans la description suivante, les éléments du dispositif de réception et/ou d'émission de signaux radiofréquences basse puissance qui sont bien connus de l'homme du métier dans ce domaine technique ne sont relatés que de manière simplifiée. Un tel dispositif peut être utilisé dans différentes applications, telles que dans un téléphone cellulaire d'un système de télécommunication par exemple, ou également pour la réception de signaux du type GPS pour des opérations de navigation.

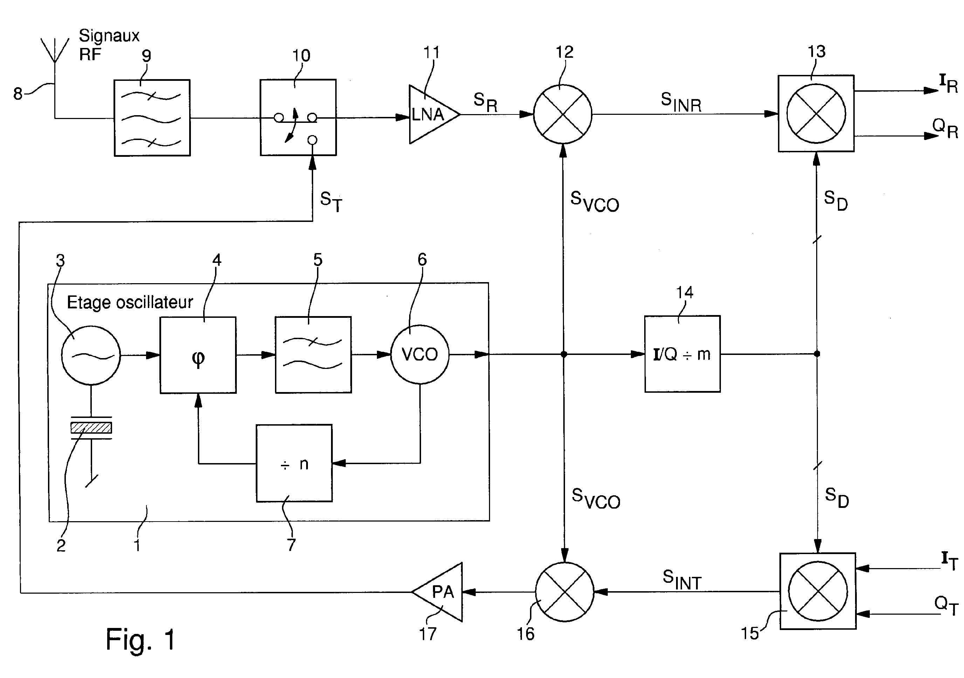

En référence à la figure 1, un dispositif de réception et/ou d'émission de signaux radiofréquences selon l'invention est représenté de manière simplifiée en illustrant spécialement l'étage d'entrée pour les opérations de conversion de fréquence des signaux captés ou transmis. Pour ce faire, ledit dispositif comprend tout d'abord une antenne 8 pour recevoir ou transmettre des signaux radiofréquences RF, et un filtre passe-bande 9, qui peut être précédé d'un amplificateur à faible bruit non représenté. Ce filtre peut être un filtre passe-bande sélectif du type SAW (Surface Acoustic Wave en terminologie anglaise). Le filtre passe-bande est relié directement à un élément commutateur 10 susceptible d'être commandé pour placer le dispositif dans un mode de réception de signaux radiofréquences RF comme représenté en figure 1, ou dans un mode de transmission de signaux radiofréquences S_{T}.

Pour la réception de signaux radiofréquences RF, le dispositif comprend également à la suite de l'élément commutateur 10, un amplificateur à faible bruit LNA 11 pour amplifier les signaux radiofréquences filtrés par le filtre 9, et un premier bloc mélangeur 12 pour effectuer une première opération de conversion de fréquence. Des signaux filtrés et amplifiés S_{R} sont mélangés dans le premier bloc mélangeur avec des premiers signaux haute fréquence S_{VCO} générés par un étage oscillateur 1. Les signaux intermédiaires S_{INR} ainsi produits par le premier bloc mélangeur 12 sont principalement des signaux dont la fréquence est égale à la soustraction entre la fréquence porteuse des signaux radiofréquences filtrés S_{R} et la fréquence des premiers signaux haute fréquence S_{VCO}.

Bien entendu selon l'invention pour réduire le bruit relatif à la fréquence image en entrée de ce premier bloc mélangeur 12 causé en partie par l'amplificateur 11, l'étage oscillateur 1 est configuré de telle manière à générer des premiers signaux haute fréquence S_{VCO} dont la fréquence est déterminée plus grande d'un facteur M/N que la fréquence porteuse des signaux radiofréquences filtrés et amplifiés S_{R}. N et M sont des nombres entiers où M est plus grand que N mais inférieur à 2N pour que le facteur M/N soit compris entre 1 et 2. Préférentiellement, le nombre M est un multiple de 2. La fréquence des premiers signaux haute fréquence doit également être en dehors de la marge de fréquence du filtre passe-bande 9 d'entrée. Ceci permet d'éviter d'avoir un rayonnement des signaux haute fréquence à travers le filtre passe-bande et l'antenne dans le mode de réception, car le bloc mélangeur 12 a une isolation limitée.

Selon une forme préférée de réalisation du dispositif, l'étage oscillateur 1 est configuré de telle manière à générer des premiers signaux haute fréquence dont la fréquence est sensiblement égale à 4/3 de la fréquence des signaux filtrés et amplifiés S_{R}. De cette manière pour la seconde opération de conversion de fréquence, il est possible de générer des seconds signaux haute fréquence S_{D} en phase et en quadrature sur la base des premiers signaux haute fréquence à l'aide d'un diviseur maître-esclave 14 de conception simple, par exemple un diviseur par 4.

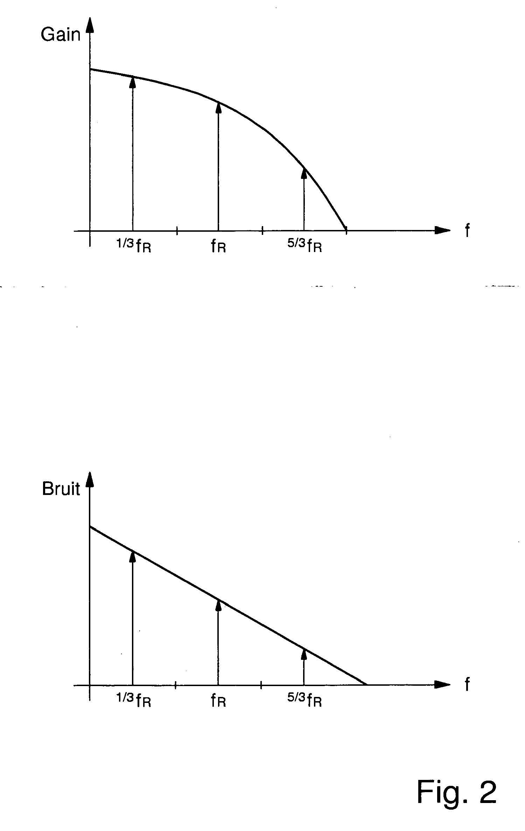

La figure 2 permet de bien montrer l'avantage de générer des premiers signaux haute fréquence de fréquence plus grande que la fréquence des signaux radiofréquences reçus pour réduire l'influence du bruit relatif à la fréquence image en entrée du premier bloc mélangeur. Selon l'invention, la fréquence image en entrée du premier bloc mélangeur, qui est causée en partie par l'amplificateur à faible bruit, vaut 5/3 de la fréquence f_{R} des signaux radiofréquences avec une fréquence des premiers signaux haute fréquence fixée à 4/3 de la fréquence des signaux radiofréquences. Par contre, la fréquence image à la sortie du premier bloc mélangeur vaut 1/3 de la fréquence f_{R} des signaux radiofréquences avec une fréquence des premiers signaux haute fréquence fixée classiquement à 2/3 de la fréquence des signaux radiofréquences. De ce fait, on remarque selon l'invention que le gain et le niveau du bruit des signaux à fréquence image sont bien inférieurs à ceux d'une solution classique utilisant des premiers signaux haute fréquence dont la fréquence est inférieure à la fréquence des signaux radiofréquences captés.

Dans la solution classique, le bruit pénalisant relatif à la fréquence image est de l'ordre de 4.5 dB, alors que selon l'invention, ce bruit pénalisant n'est que de 1.5 dB. Ainsi, une forte réduction de 3 dB de ce bruit pénalisant par rapport aux signaux utiles amplifiés par l'amplificateur à faible bruit est obtenue. Ceci est un avantage considérable dans un dispositif basse puissance, pour lequel il est très important de minimiser le bruit par rapport aux signaux utiles. Une diminution même de 0.5 dB du bruit lors de la réception des signaux radiofréquences est déjà très difficile à obtenir quelque soit l'architecture du dispositif. De plus, avec un nombre réduit de composants, le dispositif basse puissance selon l'invention peut facilement démoduler l'information contenue dans les signaux radiofréquences captés. Un tel dispositif basse puissance peut ainsi équiper un instrument de petite taille, tel qu'une montre-bracelet ou un téléphone portable.

II est encore à noter qu'en sélectionnant une fréquence des premiers signaux haute fréquence plus grande d'un facteur compris entre 1 et 2 que la fréquence des signaux radiofréquences, cela permet d'éviter la génération de fréquences harmoniques lors de la conversion de fréquence.

En référence à la figure 1, l'étage oscillateur 1 du dispositif comprend principalement un synthétiseur de fréquence avec un oscillateur commandé en tension VCO 6 pour générer les premiers signaux haute fréquence S_{VCO}. Cet étage oscillateur 1 comprend en outre un bloc oscillateur de référence 3 avec un cristal de quartz 2, un détecteur de phase et de fréquence 4 pour comparer la fréquence des signaux de référence de l'oscillateur 3 avec la fréquence des signaux provenant de l'oscillateur commandé en tension VCO 6, qui est divisée par un facteur n dans le diviseur 7. Les signaux de commande sortant du détecteur 4 sont filtrés par un filtre passe-bas 5 afin de produire une tension de commande à l'oscillateur commandé en tension 6 en fonction de la comparaison des signaux fournis audit détecteur 4.

La fréquence des signaux de référence de l'oscillateur 3 peut être de l'ordre de 8 MHz, alors que la fréquence des premiers signaux haute fréquence peut être de l'ordre de 1.2 GHz. Cette fréquence élevée n'augmente que de manière minimale la consommation du dispositif par rapport à une fréquence classique de l'ordre de 600 MHz. Le dispositif peut être en mesure de capter des signaux radiofréquences de fréquence porteuse voisine de 900 MHz dépendant de la marge de fréquences définie par le filtre passe-bande 9.

Le dispositif comprend encore un second bloc mélangeur 13 pour effectuer une seconde opération de conversion de fréquence des signaux intermédiaires S_{INR}. Ce second bloc mélangeur 13 est constitué de deux mélangeurs non représentés pour mélanger respectivement les seconds signaux haute fréquence en phase et respectivement en quadrature avec les signaux intermédiaires S_{INR}. Les signaux produits par les deux mélangeurs du second bloc mélangeur 13 sont des signaux dont la fréquence est égale à la soustraction entre la fréquence des signaux intermédiaires S_{INR} et la fréquence des seconds signaux haute fréquence S_{D}. Comme dans le mode préféré de réalisation, la fréquence des seconds signaux haute fréquence est sensiblement égale à la fréquence porteuse des signaux intermédiaires, les deux signaux de sortie en phase I_{R} et en quadrature Q_{R} sont des signaux en bande de base à fréquence porteuse proche de 0.

Bien entendu, il pourrait être prévu à la sortie du second bloc mélangeur 13, un amplificateur à gain commandé suivi par un convertisseur analogique/digital afin de fournir des signaux de sortie I_{R} et Q_{R} échantillonnés et quantifiés.

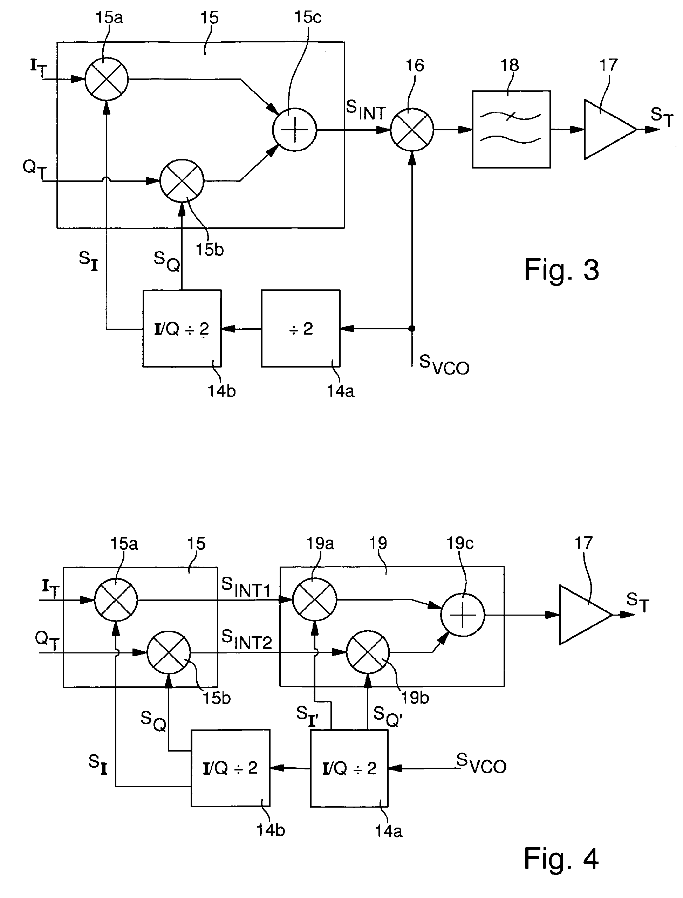

Pour l'émission de signaux radiofréquences, le dispositif peut comprendre un troisième bloc mélangeur 15 pour effectuer une première opération de conversion de fréquence afin d'augmenter la fréquence des signaux en bande de base I_{T} et Q_{T}. Ce troisième bloc mélangeur 15 est constitué de deux mélangeurs suivis d'un additionneur, comme montré en référence à la figure 3 décrite ci-après, pour mélanger les seconds signaux haute fréquence S_{D} en phase et en quadrature avec respectivement les signaux en bande de base I_{T} et Q_{T}. Des signaux intermédiaires d'émission S_{INT} sont fournis à la sortie de l'additionneur du troisième bloc mélangeur 15, dont la fréquence correspond à la fréquence des seconds signaux haute fréquence S_{D}. La fréquence de ces signaux intermédiaires est de préférence égale à 1/3 de la fréquence des signaux radiofréquences à transmettre S_{T}.

Le dispositif comprend encore un quatrième bloc mélangeur 16 pour augmenter la fréquence des signaux intermédiaires d'émission S_{INT} à l'aide des premiers signaux haute fréquence S_{VCO} générés par l'étage oscillateur 1. Le quatrième bloc mélangeur 16 fournit des signaux radiofréquences, qui sont amplifiés par un amplificateur de puissance 17. Les signaux radiofréquences amplifiés S_{T} sont transmis par l'antenne 8 en passant par l'élément commutateur 10 et le filtre passe-bande 9.

La figure 3 représente une seconde forme d'exécution d'une partie du dispositif pour l'émission de signaux radiofréquences S_{T}. Cette seconde forme d'exécution est sensiblement équivalente à celle décrite en référence à la figure 1 pour le dispositif dans le mode d'émission.

Pour l'émission de signaux radiofréquences, le dispositif comprend un troisième bloc mélangeur 15 pour effectuer une première opération de conversion de fréquence. Cette première opération permet d'augmenter la fréquence des signaux de données à transmettre I_{T} et Q_{T}, qui sont en bande de base c'est-à-dire à fréquence porteuse voisine de 0. Ce troisième bloc mélangeur 15 est constitué d'un premier mélangeur 15a, d'un second mélangeur 15b et d'un additionneur 15c pour additionner les signaux sortant des premier et second mélangeurs.

Pour cette première opération de conversion de fréquence, la fréquence des premiers signaux haute fréquence S_{VCO} doit être divisée par 4 par un premier diviseur par 2 14a et un second diviseur par 2 maître-esclave 14b pour fournir des seconds signaux haute fréquence en phase S_{I} et en quadrature S_{Q}. Le premier mélangeur 15a permet le mélange des signaux en phase I_{T} avec les seconds signaux haute fréquence en phase S_{I}, alors que le second mélangeur 15b permet le mélange des signaux en quadrature Q_{T} avec les seconds signaux haute fréquence en quadrature S_{Q}. Les signaux sortant des premier et second mélangeurs 15a et 15b sont additionnés dans l'additionneur 15c afin de fournir des signaux intermédiaires d'émission S_{INT} à fréquence équivalente à la fréquence des seconds signaux haute fréquence.

Une seconde opération de conversion de fréquence est réalisée à l'aide d'un quatrième bloc mélangeur 16, qui reçoit les signaux intermédiaires S_{INT} et les premiers signaux haute fréquence S_{VCO}. Les signaux radiofréquences utiles de sortie de ce quatrième bloc mélangeur ont une fréquence porteuse 3/4 inférieure à la fréquence des premiers signaux haute fréquence selon l'invention. La fréquence image des signaux parasites en sortie de ce quatrième bloc mélangeur valant 5/3 la fréquence des signaux radiofréquences peut être facilement filtrée par un filtre passe-bas 18. Ainsi, les signaux filtrés peuvent être amplifiés sans signaux parasites par l'amplificateur de puissance 17 afin de fournir des signaux radiofréquences S_{T} susceptibles d'être transmis par l'antenne du dispositif. Sans le filtre passe-bas, les signaux parasites seraient amplifiés au même titre que les signaux utiles ce qui gaspillerait inutilement de l'énergie dans l'amplificateur 17.

La figure 4 représente une troisième forme d'exécution d'une partie du dispositif pour l'émission de signaux radiofréquences S_{T}.

Pour l'émission de signaux radiofréquences, le dispositif comprend un troisième bloc mélangeur 15 pour effectuer une première opération de conversion de fréquence. Cette première opération permet d'augmenter la fréquence des signaux de données à transmettre I_{T} et Q_{T}, qui sont en bande de base c'est-à-dire à fréquence porteuse voisine de 0. Ce troisième bloc mélangeur 15 est constitué d'un premier mélangeur 15a et d'un second mélangeur 15b.

Pour cette première opération de conversion de fréquence, la fréquence des premiers signaux haute fréquence S_{VCO} doit être divisée par 4 comme pour la seconde forme d'exécution. Pour ce faire, cette division est réalisée par un premier diviseur par 2 maître-esclave 14a, qui fournit des troisièmes signaux haute fréquence en phase S_{I'} et en quadrature S_{Q'}, suivi par un second diviseur par 2 maître-esclave 14b recevant les signaux divisés en phase du premier diviseur par 2. Le second diviseur par 2 14b fournit ainsi des seconds signaux haute fréquence en phase S_{I} et en quadrature S_{Q}. Le premier mélangeur 15a permet le mélange des signaux en phase I_{T} avec les seconds signaux haute fréquence en phase S_{I} pour fournir des premiers signaux intermédiaires d'émission en phase S_{INT1}. Le second mélangeur 15b permet le mélange des signaux en quadrature Q_{T} avec les seconds signaux haute fréquence en quadrature S_{Q} pour fournir des seconds signaux intermédiaires d'émission en quadrature S_{INT2}. Les premiers et seconds signaux intermédiaires ont ainsi une fréquence équivalente à la fréquence des seconds signaux haute fréquence.

Une seconde opération de conversion de fréquence est réalisée à l'aide d'un quatrième bloc mélangeur 19. Ce quatrième bloc mélangeur comprend un premier mélangeur 19a, un second mélangeur 19b et un additionneur 19c pour additionner les signaux fournis par les premier et second mélangeurs. Le premier mélangeur 19a permet le mélange des signaux intermédiaires en phase S_{INT1} avec des troisièmes signaux haute fréquence en phase S_{I'}, alors que le second mélangeur 19b permet le mélange des signaux intermédiaires en quadrature S_{INT2} avec les troisièmes signaux haute fréquence en quadrature S_{Q'}. Les signaux sortant du quatrième bloc mélangeur sont des signaux radiofréquences qui sont amplifiés finalement par l'amplificateur de puissance 17 afin de pouvoir transmettre les signaux radiofréquences amplifiés S_{T} par l'antenne du dispositif.

II est à noter qu'avec cette troisième forme d'exécution d'une partie du dispositif pour l'émission des signaux radiofréquences, il est possible de procéder à une modulation à double conversion du type SSB (Single Side Band Modulation en terminologie anglaise). Cette structure permet de supprimer le filtre pour la fréquence image avant l'amplificateur de puissance, étant donné que dans ce cas, il n'y a pas de fréquence image à filtrer à la sortie du quatrième bloc mélangeur 19. II est également avantageux de fournir des premiers signaux haute fréquence S_{VCO} dont la fréquence doit être divisée par les premier et second diviseurs 14a et 14b pour opérer les deux conversions de fréquence avec précision. II serait par contre difficile de prévoir un oscillateur fournissant directement les troisièmes signaux haute fréquence en phase et en quadrature pour effectuer le mélange dans le quatrième bloc mélangeur 19.

A partir de la description qui vient d'être faite de multiples variantes de réalisation du dispositif basse puissance de réception et/ou d'émission de signaux radiofréquences à réduction du bruit peuvent être conçues par l'homme du métier sans sortir du cadre de l'invention définie par les revendications. II peut être prévu de détecter la fréquence centrale des signaux radiofréquences à capter de manière à calibrer l'étage oscillateur pour la génération des premiers signaux haute fréquence. II peut être prévu d'utiliser l'ensemble composé de l'amplificateur et des deux blocs mélangeurs aussi bien pour la réception que pour l'émission des signaux radiofréquences.

## Revendications

1. Dispositif de réception et/ou d'émission de signaux radiofréquences, ledit dispositif basse puissance comprenant :
- un filtre passe-bande (9) pour filtrer des signaux radiofréquences captés ou transmis par une antenne (8) du dispositif,
- au moins un amplificateur à faible bruit (11) pour amplifier les signaux filtrés par le filtre passe-bande,
- un étage oscillateur (1) pour générer des premiers signaux haute fréquence (Svco).
- au moins un diviseur de fréquence (14) pour diviser par M la fréquence des premiers signaux afin de générer des seconds signaux haute fréquence (S_{D}), où M est un nombre entier plus grand que 1,
- au moins un premier bloc mélangeur (12) pour mélanger les signaux radiofréquences filtrés et amplifiés (S_{R}) avec les premiers signaux haute fréquence (S_{VCO}) afin de produire des signaux intermédiaires (S_{INR}) dont la fréquence est égale à la soustraction entre une fréquence porteuse des signaux radiofréquences et la fréquence des premiers signaux,
- au moins un second bloc mélangeur (13) pour mélanger les signaux intermédiaires fournis par le premier bloc mélangeur avec les seconds signaux haute fréquence afin de produire des signaux de sortie (I_{R}, Q_{R}) dont la fréquence est égale à la soustraction entre la fréquence des signaux intermédiaires et la fréquence des seconds signaux haute fréquence,
ledit dispositif étant **caractérisé en ce que** l'étage oscillateur (1) est configuré de telle manière à générer des premiers signaux haute fréquence (S_{VCO}), dont la fréquence est en dehors de la bande de fréquence du filtre passe-bande et plus grande d'un facteur M/N compris entre 1 et 2 que la fréquence des signaux radiofréquences reçus, où N et M sont des nombres entiers plus grands que 1 avec M plus grand que N mais inférieur à 2·N, pour réduire le bruit lié à la fréquence image des signaux convertis.

2. Dispositif selon la revendication 1, **caractérisé en ce que** la fréquence des premiers signaux haute fréquence est plus grande d'un facteur M/N que la fréquence des signaux radiofréquences reçus, où M est un multiple de 2, de préférence égal à 4, alors que N est de préférence égal à 3 définissant un facteur égal à 4/3, et **en ce que** le diviseur de fréquence (14) est un diviseur par 4.

3. Dispositif selon l'une des revendications précédentes, **caractérisé en ce que** le diviseur de fréquence (14) est du type maître-esclave de manière à générer des seconds signaux haute fréquence en phase (S_{I}) et en quadrature (S_{Q}), et **en ce que** le second bloc mélangeur (13) comprend un premier mélangeur pour mélanger les signaux intermédiaires (S_{INR}) avec les seconds signaux haute fréquence en phase pour fournir des signaux de sortie en bande de base en phase (I_{R}), et un second mélangeur pour mélanger les signaux intermédiaires (S_{INR}) avec les seconds signaux haute fréquence en quadrature pour fournir des signaux de sortie en bande de base en quadrature (Q_{R}).

4. Dispositif selon l'une des revendications précédentes, **caractérisé en ce que** l'étage oscillateur (1) comprend un bloc oscillateur de référence (3) avec un cristal de quartz (2), un détecteur de phase et de fréquence (4) pour comparer la fréquence des signaux de référence de l'oscillateur (3) avec la fréquence des signaux provenant d'un oscillateur commandé en tension (6), qui est divisée par un facteur n dans un diviseur d'oscillateur (7), un filtre passe-bas (5) afin de produire une tension de commande à l'oscillateur commandé en tension (6) en fonction de la comparaison des signaux fournis audit détecteur (4) de manière que l'oscillateur commandé en tension génère les premiers signaux haute fréquence.

5. Dispositif selon la revendication 4, **caractérisé en ce que** l'étage oscillateur est configuré pour générer des premiers signaux haute fréquence sur la base d'une détection de fréquence des signaux radiofréquences captés par l'antenne (8) du dispositif.

6. Dispositif selon l'une des revendications précédentes, **caractérisé en ce qu'**il comprend un élément commutateur (10) entre le filtre passe-bande (9) et l'amplificateur à faible bruit (11) de manière à pouvoir être commandé pour placer le dispositif dans un mode de réception de signaux radiofréquences ou dans un mode d'émission de signaux radiofréquences par la même antenne (8).

7. Dispositif selon l'une des revendications précédentes, **caractérisé en ce que** pour l'émission de signaux radiofréquences, il comprend un troisième bloc mélangeur (15), qui comprend un premier mélangeur (15a) pour mélanger des signaux de données en bande de base en phase (I_{T}) avec les seconds signaux haute fréquence en phase (S_{I}), un second mélangeur (15b) pour mélanger des signaux de données en bande de base en quadrature (Q_{T}) avec les seconds signaux haute fréquence en quadrature (S_{Q}), et un additionneur (15c) pour additionner les signaux de sortie des premier et second mélangeurs (15a, 15b) afin de fournir des signaux intermédiaires d'émission (S_{INT}), et **en ce qu'**il comprend un quatrième bloc mélangeur (16) pour mélanger les signaux intermédiaires d'émission (S_{INT}) avec les premiers signaux haute fréquence (S_{VCO}) afin de fournir des signaux radiofréquences, qui sont filtrés par un filtre passe-bas (18) et amplifiés par un second amplificateur de puissance (17) pour être transmis par l'antenne du dispositif.

8. Dispositif selon l'une des revendications 1 à 6, **caractérisé en ce que** pour l'émission de signaux radiofréquences, il comprend un troisième bloc mélangeur (15), qui comprend un premier mélangeur (15a) pour mélanger des signaux de données en bande de base en phase (I_{T}) avec les seconds signaux haute fréquence en phase (S_{I}) pour fournir des signaux intermédiaires en phase (S_{INT1}), un second mélangeur (15b) pour mélanger des signaux de données en bande de base en quadrature (Q_{T}) avec les seconds signaux haute fréquence en quadrature (S_{Q}) pour fournir des signaux intermédiaires en quadrature (S_{INT2}), **en ce que** le diviseur de fréquence comprend un premier diviseur par 2 maître-esclave (14a) des premiers signaux haute fréquence de manière à fournir des troisièmes signaux haute fréquence en phase, (S_{I'}) et en quadrature (S_{Q'}) et un second diviseur par 2 maître-esclave (14b) pour fournir les seconds signaux haute fréquence en phase et en quadrature, et **en ce qu'**il comprend un quatrième bloc mélangeur (19), qui comprend un premier mélangeur (19a) pour mélanger les signaux intermédiaires en phase (S_{INT1}) avec les troisièmes signaux haute fréquence en phase (S_{I'}), un second mélangeur (19b) pour mélanger les signaux intermédiaires en quadrature (S_{INT2}) avec les troisièmes signaux haute fréquence en quadrature (S_{Q'}), et un additionneur (19c) pour additionner les signaux de sortie des premier et second mélangeurs (19a, 19b) du quatrième bloc afin de fournir directement des signaux radiofréquences à amplifier par un second amplificateur de puissance (17) sans passer par un filtre passe-bas et à transmettre par l'antenne du dispositif.

## Claims

1. Radio-frequency signal reception and/or transmission device, said low power device including:
- a bandpass filter (9) for filtering the radio-frequency signals picked up or transmitted by an antenna (8) of the device
- at least one low noise amplifier (11) for amplifying the signals filtered by the bandpass filter,
- an oscillator stage (1) for generating first high frequency signals (Svco),
- at least one frequency divider (14) for dividing the frequency of the first signals by M in order to generate second high frequency signals (S_{D}), where M is an integer number greater than 1,
- at least a first mixer unit (12) for mixing the filtered and amplified radio-frequency signals (S_{R}) with the first high frequency signals (S_{VCO}) in order to produce intermediate signals (S_{INR}) whose frequency is equal to the subtraction between a carrier frequency of the radio-frequency signals and the frequency of the first signals,
- at least a second mixer unit (13) for mixing the intermediate signals supplied by the first mixer unit with the second high frequency signals in order to produce output signals (I_{R}, Q_{R}) whose frequency is equal to the subtraction between the frequency of the intermediate signals and the frequency of the second high frequency signals,
said device being **characterized in that** the oscillator stage (1) is configured so as to generate first high frequency signals (S_{VCO}) whose frequency is outside the frequency band of the bandpass filter and higher, by a factor M/N comprised between 1 and 2, than the frequency of the received radio-frequency signals, where N and M are integer numbers greater than 1, with M greater than N, but smaller than 2·N, to reduce the noise linked to the image frequency of the converted signals.

2. Device according to claim 1, **characterized in that** the frequency of the first high frequency signals is higher than the frequency of the received radio-frequency signals by a factor M/N, where M is a multiple of 2, preferably equal to 4, whereas N is preferably equal to 3 defining a factor equal to 4/3, and **in that** the frequency divider (14) is a divider-by-4.

3. Device according to any one of the preceding claims, **characterized in that** the frequency divider (14) is of the master-slave type for generating second high frequency in-phase (S_{I}) and in-quadrature (S_{Q}) signals, and **in that** the second mixer unit (13) includes a first mixer for mixing the intermediate signals (S_{INR}) with the second high frequency in-phase signals to supply in-phase baseband output signals (I_{R}), and a second mixer for mixing the intermediate signals (S_{INR}) with the second high frequency in-quadrature signals to supply in-quadrature baseband output signals (Q_{R}).

4. Device according to any one of the preceding claims, **characterized in that** the stage oscillator (1) includes a reference oscillator unit (3) with a quartz crystal (2), a phase and frequency detector (4) for comparing the frequency of the reference signals from the oscillator (3) with the frequency of the signals from a voltage controlled oscillator (6), which is divided by a factor n in an oscillator divider (7), a lowpass filter (5) for producing a control voltage for the voltage controlled oscillator (6) as a function of the comparison of the signals supplied to said detector (4) such that the voltage controlled oscillator generates the first high frequency signals.

5. Device according to claim 4, **characterized in that** the oscillator stage is configured to generate first high frequency signals based on detection of the frequency of the radio-frequency signals picked up by the antenna (8) of the device.

6. Device according to any one of the preceding claims, **characterized in that** it includes a switch element (10) between the bandpass filter (9) and the low noise amplifier (11) allowing said device to be placed in a radio-frequency reception mode or in a radio-frequency transmission mode by the same antenna (8).

7. Device according to any one of the preceding claims, **characterized in that**, for the transmission of radio-frequency signals, it includes a third mixer unit (15), which includes a first mixer (15a) for mixing the in-phase baseband data signals (I_{T}) with the second high frequency in-phase signals (S_{I}), a second mixer (15b) for mixing in-quadrature baseband data signals (Q_{T}) with the second high frequency in-quadrature signals (S_{Q}), and an adder (15c) for adding the output signals from the first and second mixers (15a, 15b) in order to provide intermediate transmission signals (S_{INT}), and **in that** it includes a fourth mixer unit (16) for mixing the intermediate transmission signals (S_{INT}) with the first high frequency signals (S_{VCO}) in order to supply radio-frequency signals, which are filtered by a lowpass filter (18) and amplified by a second power amplifier (17) to be transmitted by the antenna of the device.

8. Device according to any one of claims 1 to 6, **characterized in that**, for the transmission of radio-frequency signals, it includes a third mixer unit (15), which includes a first mixer (15a) for mixing in-phase baseband data signals (I_{T}) with the second high frequency in-phase signals (S_{I}) to supply intermediate in-phase signals (S_{INT1}), a second mixer (15b) for mixing in-quadrature baseband data signals (Q_{T}) with the second high frequency in-quadrature signals (S_{Q}), to supply intermediate in-quadrature signals (S_{INT2}), **in that** the frequency divider includes a first master-slave divider-by-2 (14a) for the first high frequency signals so as to supply third high frequency in-phase signals (S_{I'}) and in-quadrature (S_{Q'}) and a second master-slave divider-by-2 (14b) to supply the second high frequency in-phase and in-quadrature signals, and **in that** it includes a fourth mixer unit (19), which includes a first mixer (19a) for mixing the intermediate in-phase signals (S_{INT1}) with the third high frequency in-phase signals (S _{I'}), a second mixer (19b) for mixing the intermediate in-quadrature signals (S_{INT2}) with the third high frequency in-quadrature signals (S_{Q'}), and an adder (19c) for adding the output signals from the first and second mixers (19a, 19b) of the fourth unit in order to supply radio-frequency signals to be amplified by a second power amplifier (17) without passing through a lowpass filter and transmitted via the antenna of the device.

## Patentansprüche

1. Empfangs- und/oder Sendegerät für Radiofrequenzsignale, besagtes niederfrequenzverstärkendes Gerät umfasst:
- einen Bandpassfilter (9) zum Filtern von Radiofrequenzsignalen, die von einer Antenne (8) des Geräts empfangen oder transmittiert werden,
- zumindest einen rauscharmen Verstärker (11) zum Verstärken der vom Bandpassfilter gefilterten Signale,
- eine Oszillatorstufe (1) zur Erzeugung erster Hochfrequenzsignale (Svco),
- zumindest einen Frequenzteiler (14) zum Teilen der Frequenz der ersten Signale durch M, um zweite Hochfrequenzsignale (S_{D}) zu generieren, wobei M eine ganze Zahl größer als 1 ist,
- zumindest einen ersten Mischblock (12) zum Mischen der gefilterten und verstärkten Radiofrequenzsignale (S_{R}) mit den ersten Hochfrequenzsignalen (Svco) um Zwischensignale (S_{INR}) zu erzeugen, deren Frequenz gleich einer Subtraktion von einer Trägerfrequenz der Radiofrequenzsignale und der Frequenz der ersten Signale ist,
- zumindest einen zweiten Mischblock (13) zum Mischen von vom ersten Mischblock bereitgestellten Zwischensignalen mit den zweiten Hochfrequenzsignalen, um Ausgangssignale (I_{R}, Q_{R}) zu erzeugen, deren Frequenz gleich einer Subtraktion zwischen der Frequenz der Zwischensignale und der Frequenz der zweiten Hochfrequenzsignale ist,
besagtes Gerät dadurch charakterisiert ist, dass die Oszillatorstufe (1) derart konfiguriert ist, um erste Hochfrequenzsignale (S_{VCO}) zu erzeugen, deren Frequenz außerhalb des Frequenzbandes des Bandpassfilters liegt und um einen zwischen 1 und 2 liegenden Faktor M/N größer als die Frequenz der empfangenen Radiofrequenzsignale ist, wobei N und M ganze Zahlen größer 1 sind mit M größer als N aber kleiner als 2N, um das Rauschen des Frequenzbildes der konvertierten Signale zu reduzieren.

2. Gerät gemäß dem Patentanspruch 1, **dadurch gekennzeichnet, dass** die Frequenz der ersten Hochfrequenzsignale um einen Faktor M/N größer als die Frequenz der empfangenen Radiofrequenzsignale ist, wobei M ein Vielfaches von 2, vorzugsweise gleich 4 ist, während N vorzugsweise gleich 3 ist, um einen Faktor von 4/3 zu definieren derart, dass der Frequenzteiler (14) ein Divisor von 4 ist.

3. Gerät nach einem der vorhergehenden Ansprüche, **dadurch gekennzeichnet, dass** der Frequenzteiler (14) Master-Slave-Typs dazu ausgebildet ist, zweite Hochfrequenzsignale in Phase (S_{I}) und in Quadratur (S_{Q}) zu erzeugen und wobei der zweite Mischblock (13) einen ersten Mischer zum Mischen der Zwischensignale (S_{INR}) mit den zweiten Hochfrequenzsignalen in Phase aufweist, um Ausgangssignale in einem tiefen Band in Phase (I_{R}) bereitzustellen und einen zweiten Mischer aufweist, um Zwischensignale (S_{INR}) mit den zweiten Hochfrequenzsignalen in Quadratur zu mischen, um Ausgangssignale im Bassband in Quadratur (Q_{R}) bereitzustellen.

4. Gerät nach einem der vorhergehenden Ansprüche, **dadurch gekennzeichnet, dass** die Oszillatorstufe (1) einen Referenz-Oszillatorblock (3) mit einem Quarzkristall (2), einen Phasen- und Frequenzdetektor (4) zum Vergleichen der Frequenz der Referenzsignale des Oszillators (3) mit der Frequenz der von einem spannungskontrollierten Oszillator (6) stammenden Signale, die in einem Oszillatordivisor (7) durch einen Faktor n geteilt werden und einen Tiefpassfilter (5) aufweist, um eine Kontrollspannung für den spannungskontrollierten Oszillator (6) zu erzeugen, um vergleichbar der von besagtem Detektor (4) bereitgestellten Signale die ersten Hochfrequenzsignale durch den spannungskontrollierten Oszillator zu erzeugen.

5. Gerät nach Anspruch 4, **dadurch gekennzeichnet, dass** die Oszillatorstufe zur Erzeugung der ersten Hochfrequenzsignale auf der Basis einer Detektion der von der Antenne des Geräts (8) empfangenen Radiofrequenzsignale konfiguriert ist.

6. Gerät nach einem der vorhergehenden Ansprüche, **dadurch gekennzeichnet, dass** es ein Kommutatorelement (10) zwischen dem Bandpassfilter (9) und dem rauscharmen Verstärker (11) aufweist, derart, um das Gerät in einen Empfangsmodus für Radiofrequenzsignale oder in einem Sendemodus für Radiofrequenzsignale mittels derselben Antenne (8) versetzen zu können.

7. Gerät nach einem der vorhergehenden Ansprüche, **dadurch gekennzeichnet, dass** es für das Senden der Radiofrequenzsignale einen dritten Mischblock (15) aufweist, der einen ersten Mischer (15a) aufweist, um die im Tiefband vorliegenden Signale in Phase (I_{T}) mit den zweiten Hochfrequenzsignalen in Phase (S_{I}) zu mischen, einen zweiten Mischer (15b) aufweist, um die Signale im Tiefband in Quadratur (Q_{T}) mit den zweiten Hochfrequenzsignalen zu mischen, und einen Addierer (15c) aufweist, um die Ausgangssignale des ersten und des zweiten Mischers (15a, 15b) zu addieren, um Zwischen-Sendesignale (S_{INT}) bereitzustellen und wobei ein vierter Mischblock (16) vorgesehen ist, um die Zwischen-Sendesignale (S_{INT}) mit den ersten Hochfrequenzsignalen (S_{VCO}) zu mischen, um Radiofrequenzsignale bereitzustellen, die von einem Tiefpassfilter (18) gefiltert und mittels eines zweiten Leistungsverstärkers (17) zum Versenden mittels der Antenne des Geräts verstärkt werden.

8. Gerät nach einem der Ansprüche 1 bis 6, **dadurch gekennzeichnet, dass** es zum Senden der Radiofrequenzsignale einen dritten Mischblock (15) aufweist, der einen ersten Mischer (15a) aufweist, um die im Tiefband bereitgestellten Signale in Phase (I_{T}) mit zweiten Hochfrequenzsignalen in Phase (S_{I}) zu mischen, um Zwischensignale in Phase (S_{INT1}) bereitzustellen, einen zweiten Mischer (15b) zum Mischen der im Tiefband bereitgestellten Signale in Quadratur (T_{T}) mit zweiten Hochfrequenzsignalen in Quadratur (S_{Q}) aufweist, um Zwischensignale in Quadratur (S_{INT2}) zu bilden, wobei der Frequenzteiler einen ersten Teiler mit 2 Master-Slaves (14a) der ersten Hochfrequenzsignale aufweist, um dritte Hochfrequenzsignale in Phase (S_{I'}) und in Quadratur (S_{Q'}) und einen zweiten Divisor mit 2 Master-Slaves (14b) zur Erzeugung zweiter Hochfrequenzsignale in Phase und in Quadratur aufweist, wobei er einen vierten Mischblock (19) aufweist, der einen ersten Mischer (19a) umfasst, um die Zwischensignale in Phase (S_{INT1}) mit dritten Hochfrequenzsignalen in Phase (S_{I'}) zu mischen, ferner einen zweiten Mischer (19b) zum Mischen der Zwischensignale in Quadratur (S_{INT2}) mit dritten Hochfrequenzsignalen in Quadratur (S_{Q'}) aufweist, und einen Addierer (19c) zum Addieren der Ausgangssignale der ersten und zweiten Mischer (19a, 19b) aufweist, um mit einem zweiten Leistungsverstärker (17) zu verstärkende Radiofrequenzsignale direkt und ohne Passieren durch einen Tiefpassfilter bereitzustellen und an die Antenne des Geräts zu übermitteln.
